(19) Europäisches Patentamt

European Patent Office

Office européen des brevets

(11) **EP 1 657 613 B1**

(12) **FASCICULE DE BREVET EUROPEEN**

(45) Date de publication et mention de la délivrance du brevet:
**03.01.2018 Bulletin 2018/01**

(51) Int Cl.:
***G05D 1/02*** (2006.01)

(21) Numéro de dépôt: **05300919.7**

(22) Date de dépôt: **14.11.2005**

(54) **Système de pilotage automatique d'un véhicule automobile imitant un pilotage humain**

System zur automatischen Steuerung eines Kraftfahrzeugs, das eine menschliche Steuerung nachahmt

System for the automatic pilotage of a motor vehicle imitating human pilotage

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.11.2004 FR 0412077**

(43) Date de publication de la demande:
**17.05.2006 Bulletin 2006/20**

(73) Titulaire: **Renault s.a.s.**
**92100 Boulogne Billancourt (FR)**

(72) Inventeurs:
• **Cordesses, Lionel**
**78180 Montigny-Le-Bretonneux (FR)**
• **Martinez, Didier**
**78920, Ecquevilly (FR)**
• **Thomassin, Ophélie**
**92500, Rueil Malmaison (FR)**

(56) Documents cités:
**US-A- 6 052 647       US-A1- 2002 198 655**
**US-B1- 6 212 453**

**Description**

L'invention concerne un système et un procédé de pilotage automatique d'un véhicule automobile, imitant un pilotage humain.

Les essais de véhicules sur pistes sont généralement effectués par des pilotes humains. Lors de ces essais, des séries de mesures sont effectuées dans des conditions similaires, afin de pouvoir observer les effets produits par la variation d'un paramètre.

Durant de telles campagnes d'essais, la conduite du véhicule doit refléter la conduite d'un conducteur humain moyen, et être répétable d'un essai à l'autre. La répétabilité de ces campagnes d'essais relève du pilotage automatique du véhicule testé.

Le pilotage humain peut se décomposer en deux phases. En effet, lors d'une première phase, le système visuel humain utilise l'angle de lacet ou de cap, c'est-à-dire un angle d'orientation entre l'axe médian longitudinal du véhicule et un axe de référence de la voie de circulation du véhicule. Le conducteur humain contrôle le cap du véhicule. Il lui arrive alors de se déporter latéralement sur la route. Puis, lors d'une deuxième phase, le conducteur réduit son écart latéral, afin de bien se repositionner sur sa voie de circulation.

Il existe des systèmes de pilotage automatique de véhicules. Les systèmes de pilotage automatique décrits dans les documents US 2002/0198655, WO 01 62537, US 6 052 647 et EP 0 971 276 sont des systèmes permettant de piloter un véhicule sans intervention d'un pilote humain.

Cependant de tels systèmes minimisent en permanence l'erreur de position latérale du véhicule, et sont plus performant que le pilote humain qu'ils remplacent. Or la pertinence et l'utilité des mesures effectuées lors de tels essais de véhicules sont d'autant plus importantes que le pilotage du véhicule reflète précisément celui d'un conducteur humain, tout en gardant une répétabilité des essais.

L'invention a pour but de proposer un système de pilotage automatique qui imite le pilotage humain, afin d'obtenir des mesures plus pertinentes lors de tests de véhicules.

Selon l'invention, il est proposé un système de pilotage automatique d'un véhicule automobile, imitant un pilotage humain, muni d'un dispositif de détermination pour déterminer un axe de référence de la voie de circulation du véhicule, un écart latéral du véhicule par rapport audit axe de référence de la voie de circulation du véhicule, et pour déterminer un angle d'orientation entre l'axe médian longitudinal du véhicule et ledit axe de référence de la voie de circulation du véhicule, d'un moyen de détection de la vitesse du véhicule, et d'une unité de commande électronique comprenant des moyens de commande d'un angle de braquage des roues avant du véhicule. L'unité de commande électronique comprend des moyens de comparaison pour comparer ledit écart latéral avec deux valeurs prédéterminées, la première valeur prédéterminée étant inférieure à la deuxième valeur prédéterminée. Les moyens de commande sont adaptés pour utiliser une loi de commande de l'angle de braquage des roues avant du véhicule dépendant des résultats fournis par lesdits moyens de comparaison.

On peut alors simuler un comportement humain qui s'effectue en deux phases. En effet, lors d'une première phase, le système visuel humain utilise l'angle de lacet ou de cap, c'est-à-dire un angle d'orientation entre l'axe médian longitudinal du véhicule et l'axe de référence de la voie de circulation du véhicule. Le conducteur contrôle le cap du véhicule. Il lui arrive alors de se déporter latéralement sur la route. Lors d'une deuxième phase, le conducteur réduit son écart latéral, afin de bien se repositionner sur sa voie de circulation.

L'invention permet entre autres d'effectuer des mesures plus pertinentes lors d'essais d'un véhicule. Ces mesures plus pertinentes permettent au constructeur de rendre plus sûr le véhicule testé, et ainsi d'accroître la sécurité des futurs passagers du véhicule. Selon l'invention, lesdits moyens de commande sont adaptés pour utiliser une loi de commande qui commute entre une fonction de l'angle d'orientation et une fonction de l'écart latéral.

Le système de pilotage automatique reproduit alors de manière précise les deux phases du pilotage humain du véhicule.

Dans un mode de réalisation avantageux, les moyens de commande sont adaptés pour utiliser ladite fonction de l'écart latéral lorsque les moyens de comparaison détectent une valeur absolue d'écart latéral supérieure à la deuxième valeur prédéterminée, tant que ladite valeur absolue d'écart latéral est supérieure à la première valeur prédéterminée.

Dans un mode de réalisation préféré, les moyens de commande sont adaptés pour utiliser ladite fonction de l'angle d'orientation lorsque les moyens de comparaison détectent une valeur absolue d'écart latéral inférieure ou égale à la première valeur prédéterminée, tant que ladite valeur absolue d'écart latéral est inférieure ou égale à la deuxième valeur prédéterminée.

Dans un autre mode de réalisation, lesdits moyens de commande sont adaptés pour utiliser une loi de commande comprenant un régime transitoire pour commuter entre une fonction de l'angle d'orientation et une fonction de l'écart latéral. Le régime transitoire est une combinaison linéaire variable de ladite fonction de l'angle d'orientation et de ladite fonction de l'écart latéral.

Il est alors possible d'avoir une commutation douce, et non une commutation brutale, et ainsi de simuler encore plus précisément une conduite humaine.

Par exemple, le dispositif de détermination est un système de positionnement global ou GPS.

En outre, le système comprend un dispositif d'activation/désactivation.

Le dispositif peut être activé ou désactivé en fonction des tests effectués sur le véhicule, car pour certains tests, il peut être nécessaire de désactiver le système. Cette désactivation peut être effectuée par une personne ou par un dispositif embarqué à bord du véhicule.

Selon l'invention, il est également proposé un procédé de pilotage automatique d'un véhicule automobile, imitant un pilotage humain, comprenant une étape de détermination durant laquelle on détermine un axe de référence de la voie de circulation du véhicule, un écart latéral du véhicule par rapport audit axe de référence de la voie de circulation du véhicule, un angle d'orientation entre l'axe médian longitudinal du véhicule et ledit axe de référence de la voie de circulation du véhicule, et la vitesse du véhicule. Le procédé de pilotage automatique comprend les étapes suivantes durant lesquelles :

- on compare ledit écart latéral avec deux valeurs prédéterminées, la première valeur prédéterminée étant inférieure à la deuxième valeur prédéterminée ; et
- on utilise une loi de commande de l'angle de braquage des roues avant du véhicule dépendant des résultats fournis par ladite étape de comparaison.

Selon l'invention, ladite loi de commande commute entre une fonction de l'angle d'orientation et une fonction de l'écart latéral.

Dans un mode de mise en oeuvre avantageux, on utilise ladite fonction de l'écart latéral lorsque l'on détecte, lors de ladite étape de comparaison, une valeur absolue d'écart latéral supérieure à la deuxième valeur prédéterminée, tant que ladite valeur absolue d'écart latéral est supérieure à la première valeur prédéterminée, et on utilise ladite fonction de l'angle d'orientation lorsque l'on détecte, lors de ladite étape de comparaison, une valeur absolue d'écart latéral inférieure ou égale à la première valeur prédéterminée, tant que ladite valeur absolue d'écart latéral est inférieure ou égale à la deuxième valeur prédéterminée.

Dans un mode de mise en oeuvre préféré, on utilise une loi de commande comprenant un régime transitoire pour commuter entre une fonction de l'angle d'orientation et une fonction de l'écart latéral, ledit régime transitoire étant une combinaison linéaire variable de ladite fonction de l'angle d'orientation et de ladite fonction de l'écart latéral.

D'autres buts, caractéristiques et avantages de l'invention apparaîtront à la lecture de la description suivante, de quelques exemples nullement limitatifs, et faite en référence aux dessins annexés sur lesquels :

- la figure 1 est un schéma synoptique d'un véhicule décrivant l'angle d'orientation et l'écart latéral selon l'invention ;
- la figure 2 est un schéma synoptique d'un mode de réalisation d'un système selon l'invention ; et
- la figure 3 est un schéma illustrant une mise en oeuvre du procédé selon l'invention.

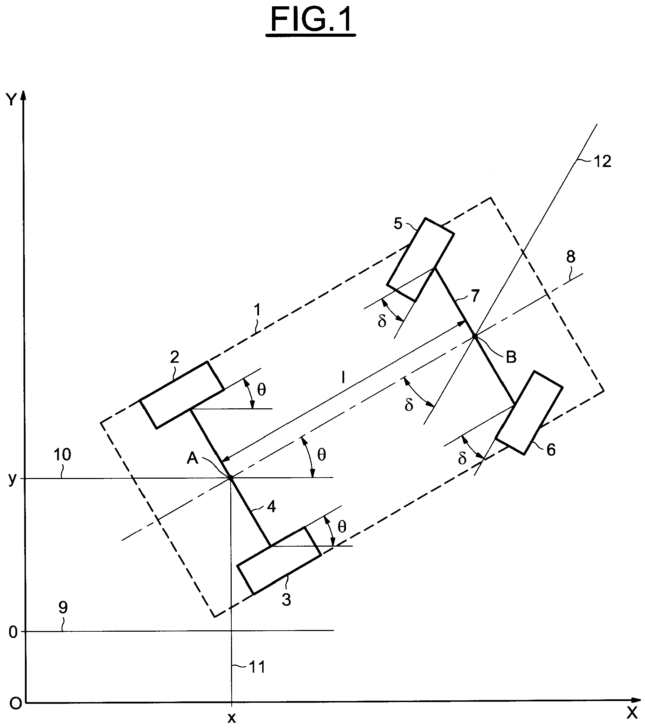

Sur la figure 1 est représenté un véhicule 1 équipé d'un système selon l'invention.

Le véhicule comprend deux roues arrière 2 et 3 reliées par un essieu 4, et deux roues avant 5 et 6 reliées par une essieu 7. L'axe 8 est l'axe médian longitudinal du véhicule 1. Sur un repère de référence XÔY, dont l'axe des abscisses OX est parallèle à l'axe de référence 9 de la voie de circulation du véhicule 1, d'équation y=0, on a représenté un axe 10, à l'instant présent, d'écart latéral y par rapport à l'axe de référence 9 de la voie de circulation du véhicule 1 du point médian A de l'essieu arrière 4.

On a également représenté l'axe 11, à l'instant présent, d'abscisse x du point médian A de l'essieu arrière 4.

L'angle d'orientation $\theta$ est l'angle entre l'axe médian longitudinal 8 du véhicule 1 et l'axe 10, c'est-à-dire l'angle entre l'axe médian longitudinal 8 du véhicule 1 et l'axe 9 de référence de la voie de circulation du véhicule, car les axes 9 et 10 sont parallèles.

On a également représenté l'angle de braquage $\delta$ des roues avant 5 et 6 du véhicule 1. L'axe 12 représente l'axe parallèle aux axes des roues avant 5 et 6 passant par le point médian B de l'essieu avant 7.

La longueur 1 représente l'empattement du véhicule, c'est-à-dire la distance entre les essieux avant 7 et arrière 4.

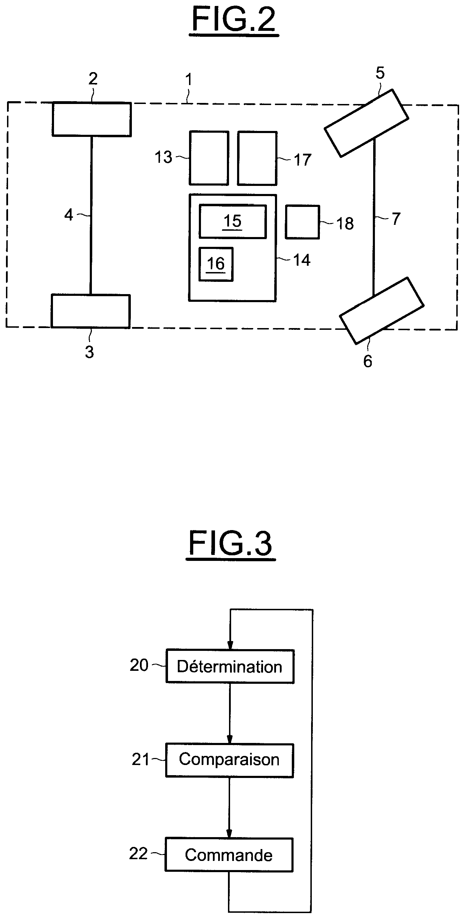

Sur la figure 2 est représenté le véhicule 1 équipé d'un système de pilotage automatique selon l'invention. Il comprend un dispositif de détermination 13 pour déterminer un axe de référence 9 de la voie de circulation du véhicule 1, un écart latéral y du véhicule 1 par rapport à l'axe de référence 9 de la voie de circulation du véhicule 1, et un angle d'orientation $\theta$ entre l'axe médian longitudinal du véhicule 8 et l'axe de référence 9 de la voie de circulation du véhicule 1.

Par exemple, ce dispositif de détermination 13 est un système de positionnement global ou GPS. Dans la suite de la description, nous considèrerons que le dispositif de détermination 13 est un GPS, cependant un autre système fournissant les données citées ci-dessus convient également.

Le système comprend en outre une unité de commande électronique 14 qui assure la gestion du fonctionnement de multiples éléments du véhicule 1. L'unité de commande électronique 14 comprend un module de commande 15 de l'angle de braquage $\delta$ des roues avant 5 et 6 du véhicule 1. L'unité de commande électronique 14 comprend également un module de comparaison 16 capable de comparer l'écart latéral y avec deux valeurs prédéterminées $y_{min}$ et $y_{max}$, la première valeur prédéterminée $y_{min}$ étant inférieure à la deuxième valeur prédéterminée $y_{max}$.

Le véhicule 1 est, en outre équipé d'un module de détection 17 de la vitesse du véhicule 1, qui est, par exemple, une centrale inertielle.

Le véhicule 1 comprend également un module d'activation/désactivation 18 permettant d'activer ou de désactiver le système de pilotage embarqué.

La figure 3 illustre une mise en oeuvre du procédé selon l'invention. Lors d'une étape 20 de détermination, on détermine un écart latéral y du véhicule 1 par rapport à l'axe de référence 9 de la voie de circulation du véhicule 1, et on détermine un angle d'orientation θ entre l'axe médian longitudinal 8 du véhicule 1 et l'axe de référence 9 de la voie de circulation du véhicule 1.

L'axe de référence 9, l'écart latéral y et l'angle d'orientation θ sont fournis à l'unité de commande électronique 14 par le système de positionnement global 13 (GPS).

Puis, lors d'une étape de comparaison 21, le module de comparaison 16 compare ledit écart latéral y avec les deux valeurs prédéterminées $y_{min}$ et $y_{max}$.

En fonction du résultat de l'étape de comparaison 21, lors d'une étape de commande 22, le module de commande 15 commande l'angle de braquage δ des roues avant 5 et 6 du véhicule 1, par exemple par l'intermédiaire d'un système de pilotage de la direction du véhicule 1, autre que le volant, et non représenté sur les figures.

Un exemple de mise en oeuvre des étapes de comparaison 21 et de commande 22 est illustré par l'algorithme suivant :

$$
\begin{aligned}
&\text{if } (|y| > y_{max}) \\
&\quad \text{then} \\
&\qquad \text{while } (|y| > y_{min}) \\
&\qquad\quad \text{do} \\
&\qquad\qquad \delta = \delta_2 \\
&\qquad\quad \text{end do} \\
&\qquad \text{end while} \\
&\quad \text{endif} \\
&\text{if } (|y| \le y_{min}) \\
&\quad \text{then} \\
&\qquad \text{while } (|y| \le y_{max}) \\
&\qquad\quad \text{do} \\
&\qquad\qquad \delta = \delta_1 \\
&\qquad\quad \text{end do} \\
&\qquad \text{end while} \\
&\quad \text{endif}
\end{aligned}
$$

Dans cet algorithme, les lois de commande $\delta_1$ et $\delta_2$ sont définies comme suit. Les hypothèses suivantes sont effectuées : le véhicule 1 roule sans glissement, les corps sont considérés comme rigides, et les angles sont supposés faibles.

La loi de commande $\delta_1$ correspond à un asservissement en cap, ou angle d'orientation θ.

Par exemple, on a :

$$
\delta_1 = -k_1 \frac{l}{v} \theta
$$

dans laquelle :

$k_1$ est un coefficient positif prédéterminé, en $s^{-1}$,
1 est l'empattement du véhicule, en m,
v=dx/dt est la vitesse longitudinale du véhicule, en m/s, et
θ est l'angle d'orientation entre l'axe médian longitudinal du véhicule et l'axe de référence de la voie de circulation du véhicule.

La loi de commande $\delta_2$ correspond à un asservissement en écart latéral.

Par exemple, on a :

$$
\delta_2 = -k_2 \frac{l}{v^2} y - k_3 \frac{l}{v} \theta
$$

dans laquelle :

$$
k_3 > 2\sqrt{k_2}
$$

$k_2$ est un coefficient prédéterminé, en $rad.s^2$ ; et
$k_3$ est un coefficient prédéterminé, en $s^{-1}$ ;

Les lois de commande $\delta_1$ et $\delta_2$ utilisées permettent au système de tolérer des écarts latéraux importants, ce qui est le cas lors d'un pilotage humain du véhicule 1.

Dans un autre exemple de mise en oeuvre des étapes de comparaison 21 et de commande 22, la commutation entre les lois de commandes $\delta_1$ et $\delta_2$, comprend une phase transitoire lors de laquelle la loi de commande est :

$$
\delta = \alpha \delta_1 + (1-\alpha)\delta_2
$$

et dans laquelle α est par exemple une fonction du temps. Les commutations entre les lois de commande $\delta_1$ et $\delta_2$ s'effectuent alors en douceur.

L'utilisation d'une phase de transition lors d'une commutation entre les lois de commande $\delta_1$ et $\delta_2$ permet de simuler encore plus précisément un pilotage humain du véhicule 1.

L'invention permet de remplacer un conducteur humain par un système de pilotage automatique qui imite le comportement de conduite humain, afin de pouvoir effectuer notamment des essais de véhicules qui soient répétables, ou d'envisager une future conduite automatique du véhicule.

Les données mesurées sont plus pertinentes, car elles correspondent à une reproduction d'un comportement humain de pilotage du véhicule, de surcroît répétable. Il est alors possible, grâce à ces mesures pertinentes d'améliorer la sécurité des passagers du véhicule.

## Revendications

1. Système de pilotage automatique d'un véhicule automobile (1), imitant un pilotage humain, muni d'un dispositif de détermination (13) pour déterminer un axe de référence (9) de la voie de circulation du véhicule (1), un écart latéral y du véhicule (1) par rapport audit axe de référence (9) de la voie de circulation du véhicule (1), et pour déterminer un angle d'orientation $\theta$ entre l'axe médian longitudinal (8) du véhicule (1) et ledit axe de référence (9) de la voie de circulation du véhicule (1), d'un moyen de détection de la vitesse (17) du véhicule (1), et d'une unité de commande électronique (14) comprenant des moyens de commande (15) d'un angle de braquage $\delta$ des roues avant (5, 6) du véhicule (1), **caractérisé par le fait que** :

   - l'unité de commande électronique (14) comprend des moyens de comparaison (16) pour comparer ledit écart latéral y avec deux valeurs prédéterminées $y_{min}$ et $y_{max}$, la première valeur prédéterminée $y_{min}$ étant inférieure à la deuxième valeur prédéterminée $y_{max}$;
   - les moyens de commande (15) sont adaptés pour utiliser une loi de commande de l'angle de braquage $\delta$ des roues avant (5, 6) du véhicule (1) qui, dépendant des résultats fournis par lesdits moyens de comparaison (16), commute entre une fonction $\delta_1$ de l'angle d'orientation $\delta$ et une fonction $\delta_2$ de l'écart latéral y.

2. Système selon la revendication 1, **caractérisé par le fait que** les moyens de commande (15) sont adaptés pour utiliser ladite fonction $\delta_2$ de l'écart latéral y lorsque les moyens de comparaison (16) détectent une valeur absolue d'écart latéral supérieure à la deuxième valeur prédéterminée $y_{max}$, tant que ladite valeur absolue d'écart latéral est supérieure à la première valeur prédéterminée $y_{min}$.

3. Système selon la revendication 2, **caractérisé par le fait que** les moyens de commande (15) sont adaptés pour utiliser ladite fonction $\delta_1$ de l'angle d'orientation $\theta$ lorsque les moyens de comparaison (16) détectent une valeur absolue d'écart latéral inférieure ou égale à la première valeur prédéterminée $y_{min}$,

tant que ladite valeur absolue d'écart latéral est inférieure ou égale à la deuxième valeur prédéterminée $y_{max}$.

4. Système selon la revendication 1, **caractérisé par le fait que** les moyens de commande (15) sont adaptés pour utiliser une loi de commande comprenant un régime transitoire pour commuter entre une fonction $\delta_1$ de l'angle d'orientation $\theta$ et une fonction $\delta_2$ de l'écart latéral y, ledit régime transitoire étant une combinaison linéaire variable de ladite fonction $\delta_1$ de l'angle d'orientation $\theta$ et de ladite fonction $\delta_2$ de l'écart latéral y.

5. Système selon l'une quelconque des revendications 1 à 4, **caractérisé par le fait que** ledit dispositif de détermination (13) est un système de positionnement global.

6. Système selon l'une quelconque des revendications 1 à 5, **caractérisé par le fait que** ledit système comprend un dispositif d'activation/désactivation (18).

7. Procédé de pilotage automatique d'un véhicule automobile (1), imitant un pilotage humain, comprenant une étape de détermination durant laquelle on détermine un axe de référence (9) de la voie de circulation du véhicule (1), un écart latéral y du véhicule (1) par rapport audit axe de référence (9) de la voie de circulation du véhicule (1), un angle d'orientation $\theta$ entre l'axe médian longitudinal (8) du véhicule (1) et ledit axe de référence (9) de la voie de circulation du véhicule (1), et la vitesse du véhicule (1), **caractérisé par le fait qu'**il comprend les étapes suivantes durant lesquelles :

   - on compare (21) ledit écart latéral y avec deux valeurs prédéterminées $y_{min}$ et $y_{max}$, la première valeur prédéterminée $y_{min}$ étant inférieure à la deuxième valeur prédéterminée $y_{max}$ ; et
   - on utilise une loi de commande de l'angle de braquage $\delta$ des roues avant (5, 6) du véhicule (1), qui, dépendant des résultats fournis par ladite étape de comparaison (21), commute entre une fonction $\delta_1$ de l'angle d'orientation $\theta$ et une fonction $\delta_2$ de l'écart latéral y.

8. Procédé selon la revendication 7, **caractérisé par le fait que** :

   - on utilise ladite fonction $\delta_2$ de l'écart latéral y lorsque l'on détecte, lors de ladite étape de comparaison (21), une valeur absolue d'écart latéral supérieure à la deuxième valeur prédéterminée $y_{max}$, tant que ladite valeur absolue d'écart latéral est supérieure à la première valeur prédéterminée $y_{min}$ ; et
   - on utilise ladite fonction $\delta_1$ de l'angle d'orientation θ lorsque l'on détecte, lors de ladite étape de comparaison (21), une valeur absolue d'écart latéral inférieure ou égale à la première valeur prédéterminée $y_{min}$, tant que ladite valeur absolue d'écart latéral est inférieure ou égale à la deuxième valeur prédéterminée $y_{max}$.

9. Procédé selon la revendication 6, **caractérisé par le fait que** l'on utilise une loi de commande comprenant un régime transitoire pour passer d'une fonction $\delta_1$ de l'angle d'orientation θ à une fonction $\delta_2$ de l'écart latéral y, ledit régime transitoire étant une combinaison linéaire variable de ladite fonction de l'angle d'orientation θ et de ladite fonction de l'écart latéral y.

**Patentansprüche**

1. System zum automatischen Steuern eines Kraftfahrzeugs (1), das ein Steuern durch einen Menschen imitiert, versehen mit einer Bestimmungsvorrichtung (13), um eine Bezugsachse (9) der Fahrspur des Fahrzeugs (1), einen seitlichen Abstand y des Fahrzeugs (1) bezüglich der Bezugsachse (9) der Fahrspur des Fahrzeugs (1) zu bestimmen, und um einen Ausrichtungswinkel θ zwischen der Längsmittelachse (8) des Fahrzeugs (1) und der Bezugsachse (9) der Fahrspur des Fahrzeugs (1) zu bestimmen, einer Erfassungseinrichtung (17) der Geschwindigkeit des Fahrzeugs (1) und einer elektronischen Steuereinheit (14), die Steuereinrichtungen (15) eines Einschlagwinkels δ der Vorderräder (5, 6) des Fahrzeugs (1) enthält, **dadurch gekennzeichnet, dass**:

   - die elektronische Steuereinheit (14) Vergleichseinrichtungen (16) enthält, um den seitlichen Abstand y mit zwei vorbestimmten Werten $y_{min}$ und $y_{max}$ zu vergleichen, wobei der erste vorbestimmte Wert $y_{min}$ niedriger als der zweite vorbestimmte Wert $y_{max}$ ist;
   - die Steuereinrichtungen (15) geeignet sind, um ein Steuergesetz des Einschlagwinkels δ der Vorderräder (5, 6) des Fahrzeugs (1) zu verwenden, das abhängig von den von den Vergleichseinrichtungen (16) gelieferten Ergebnissen, zwischen einer Funktion $\delta_1$ des Ausrichtungswinkels θ und einer Funktion $\delta_2$ des seitlichen Abstands y umschaltet.

2. System nach Anspruch 1, **dadurch gekennzeichnet, dass** die Steuereinrichtungen (15) geeignet sind, um die Funktion $\delta_2$ des seitlichen Abstands y zu verwenden, wenn die Vergleichseinrichtungen (16) einen Absolutwert seitlichen Abstands höher als der zweite vorbestimmte Wert $y_{max}$ erfassen, solange der Absolutwert seitlichen Abstands höher als der erste vorbestimmte Wert $y_{min}$ ist.

3. System nach Anspruch 2, **dadurch gekennzeichnet, dass** die Steuereinrichtungen (15) geeignet sind, um die Funktion $\delta_1$ des Ausrichtungswinkels θ zu verwenden, wenn die Vergleichseinrichtungen (16) einen Absolutwert seitlichen Abstands niedriger als der oder gleich dem erste(n) vorbestimmte(n) Wert $y_{min}$ erfassen, solange der Absolutwert seitlichen Abstands niedriger als der oder gleich dem zweite (n) vorbestimmte (n) Wert $y_{max}$ ist.

4. System nach Anspruch 1, **dadurch gekennzeichnet, dass** die Steuereinrichtungen (15) geeignet sind, um ein Steuergesetz zu verwenden, das einen Übergangsbetrieb enthält, um zwischen einer Funktion $\delta_1$ des Ausrichtungswinkels θ und einer Funktion $\delta_2$ des seitlichen Abstands y umzuschalten, wobei der Übergangsbetrieb eine variable lineare Kombination der Funktion $\delta_1$ des Ausrichtungswinkels θ und der Funktion $\delta_2$ des seitlichen Abstands y ist.

5. System nach einem der Ansprüche 1 bis 4, **dadurch gekennzeichnet, dass** die Bestimmungsvorrichtung (13) ein globales Positionierungssystem ist.

6. System nach einem der Ansprüche 1 bis 5, **dadurch gekennzeichnet, dass** das System eine Aktivierungs-/Deaktivierungsvorrichtung (18) enthält.

7. Verfahren zum automatischen Steuern eines Kraftfahrzeugs (1), das ein Steuern durch einen Menschen imitiert, das einen Bestimmungsschritt enthält, während dessen eine Bezugsachse (9) der Fahrspur des Fahrzeugs (1), ein seitlicher Abstand y des Fahrzeugs (1) bezüglich der Bezugsachse (9) der Fahrspur des Fahrzeugs (1), ein Ausrichtungswinkel θ zwischen der Längsmittelachse (8) des Fahrzeugs (1) und der Bezugsachse (9) der Fahrspur des Fahrzeugs (1), und die Geschwindigkeit des Fahrzeugs (1) bestimmt werden, **dadurch gekennzeichnet, dass** es die folgenden Schritte enthält, während denen:

   - der seitliche Abstand y mit zwei vorbestimmten Werten $y_{min}$ und $y_{max}$ verglichen wird (21), wobei der erste vorbestimmte Wert $y_{min}$ niedriger als der zweite vorbestimmte Wert $y_{max}$ ist; und
   - ein Steuergesetz des Einschlagwinkels δ der Vorderräder (5, 6) des Fahrzeugs (1) verwendet wird, das abhängig von den vom Vergleichsschritt (21) gelieferten Ergebnissen zwischen einer Funktion $\delta_1$ des Ausrichtungswinkels θ und einer Funktion $\delta_2$ des seitlichen Abstands y umschaltet.

8. Verfahren nach Anspruch 7, **dadurch gekennzeichnet, dass**:

   - die Funktion $\delta_2$ des seitlichen Abstands y verwendet wird, wenn im Vergleichsschritt (21) ein Absolutwert seitlichen Abstands höher als der zweite vorbestimmte Wert $y_{max}$ erfasst wird, solange der Absolutwert seitlichen Abstands höher als der erste vorbestimmte Wert $y_{min}$ ist; und
- die Funktion $\delta_1$ des Ausrichtungswinkels $\theta$ verwendet wird, wenn im Vergleichsschritt (21) ein Absolutwert seitlichen Abstands niedriger als der oder gleich dem erste(n) vorbestimmte(n) Wert $y_{min}$ erfasst wird, solange der Absolutwert seitlichen Abstands niedriger als der oder gleich dem zweite (n) vorbestimmte (n) Wert $y_{max}$ ist.

9. Verfahren nach Anspruch 6, **dadurch gekennzeichnet, dass** ein Steuergesetz verwendet wird, das einen Übergangsbetrieb enthält, um von einer Funktion $\delta_1$ des Ausrichtungswinkels $\theta$ zu einer Funktion $\delta_2$ des seitlichen Abstands y überzugehen, wobei der Übergangsbetrieb eine variable lineare Kombination der Funktion des Ausrichtungswinkels $\theta$ und der Funktion des seitlichen Abstands y ist.


## Claims

1. System for automatically driving an automotive vehicle (1), imitating a human driver, provided with a determination device (13) for determining a reference axis (9) of the traffic route of the vehicle (1), a lateral deviation y of the vehicle (1) with respect to said reference axis (9) of the traffic route of the vehicle (1), and for determining an angle of orientation $\theta$ between the longitudinal median axis (8) of the vehicle (1) and said reference axis (9) of the traffic route of the vehicle (1), with a means (17) for detecting the speed of the vehicle (1), and with an electronic control unit (14) comprising means (15) for controlling a turn angle $\delta$ of the front wheels (5, 6) of the vehicle (1), **characterized by** the fact that:

   - the electronic control unit (14) comprises comparison means (16) for comparing said lateral deviation y with two predetermined values $y_{min}$ and $y_{max}$, the first predetermined value $y_{min}$ being lower than the second predetermined value $y_{max}$;
   - the control means (15) are capable of using a control law for controlling the turn angle $\delta$ of the front wheels (5, 6) of the vehicle (1) which, depending on the results yielded by said comparison means (16), switches between a function $\delta_1$ of the angle of orientation $\theta$ and a function $\delta_2$ of the lateral deviation y.

2. System according to Claim 1, **characterized by** the fact that the control means (15) are capable of using said function $\delta_2$ of the lateral deviation y when the comparison means (16) detect an absolute lateral deviation value that is higher than the second predetermined value $y_{max}$, as long as said absolute lateral deviation value is higher than the first predetermined value $y_{min}$.

3. System according to Claim 2, **characterized by** the fact that the control means (15) are capable of using said function $\delta_1$ of the angle of orientation $\theta$ when the comparison means (16) detect an absolute lateral deviation value that is lower than or equal to the first predetermined value $y_{min}$, as long as said absolute lateral deviation value is lower than or equal to the second predetermined value $y_{max}$.

4. System according to Claim 1, **characterized by** the fact that the control means (15) are capable of using a control law comprising a transient regime for switching between a function $\delta_1$ of the angle of orientation $\theta$ and a function $\delta_2$ of the lateral deviation y, said transient regime being a variable linear combination of said function $\delta_1$ of the angle of orientation $\theta$ and of said function $\delta_2$ of the lateral deviation y.

5. System according to any one of Claims 1 to 4, **characterized by** the fact that said determination device (13) is a global positioning system.

6. System according to any one of Claims 1 to 5, **characterized by** the fact that said system comprises an activation/deactivation device (18).

7. Method for automatically driving an automotive vehicle (1), imitating a human driver, comprising a determination step in which a reference axis (9) of the traffic route of the vehicle (1), a lateral deviation y of the vehicle (1) with respect to said reference axis (9) of the traffic route of the vehicle (1), an angle of orientation $\theta$ between the longitudinal median axis (8) of the vehicle (1) and said reference axis (9) of the traffic route of the vehicle (1), and the speed of the vehicle (1), are determined, **characterized by** the fact that it comprises the following steps in which:

   - said lateral deviation y is compared (21) with two predetermined values $y_{min}$ and $y_{max}$, the first predetermined value $y_{min}$ being lower than the second predetermined value $y_{max}$; and
   - a control law for controlling the turn angle $\delta$ of the front wheels (5, 6) of the vehicle (1) is used, which, depending on the results yielded by said comparison step (21), switches between a function $\delta_1$ of the angle of orientation $\theta$ and a function $\delta_2$ of the lateral deviation y.

8. Method according to Claim 7, **characterized by** the fact that:

   - said function $\delta_2$ of the lateral deviation y is used when, in said comparison step (21), an absolute lateral deviation value that is higher than the second predetermined value $y_{max}$ is detected, as long as said absolute lateral deviation value is higher than the first predetermined value $y_{min}$; and

- said function $\delta_1$ of the angle of orientation $\theta$ is used when, in said comparison step (21), an absolute lateral deviation value that is lower than or equal to the first predetermined value $y_{min}$ is detected, as long as said absolute lateral deviation value is lower than or equal to the second predetermined value $y_{max}$.

9. Method according to Claim 6, **characterized by** the fact that a control law comprising a transient regime for switching between a function $\delta_1$ of the angle of orientation $\theta$ and a function $\delta_2$ of the lateral deviation y is used, said transient regime being a variable linear combination of said function of the angle of orientation - and of said function of the lateral deviation y.

# FIG.1

## FIG.2

## FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20020198655 A
- WO 0162537 A
- US 6052647 A
- EP 0971276 A